# EUROPEAN PATENT SPECIFICATION

(11) **EP 2 562 069 B1**
(45) Date of publication and mention of the grant of the patent: **14.05.2014**
(21) Application number: 12180265.6
(22) Date of filing: 13.08.2012
(51) Int. Cl.: B62J 17/06, B62K 11/04

(54) **Saddle-riding type automotive vehicle**
Kraftfahrzeug mit Sattel
Véhicule à moteur de type avec selle

(30) Priority: 24.08.2011 JP 2011182602
(43) Date of publication of application: 27.02.2013
(73) Proprietor: KAWASAKI JUKOGYO KABUSHIKI KAISHA, Kobe shi, Hyogo 650-8670 (JP)
(72) Inventor: Nishihara, Toshiyuki, Hyogo, 673-8666 (JP)
(74) Representative: Riccardi, Elisa

(56) References cited:
- EP-A1- 2 042 415
- EP-A2- 0 248 619

## Description

### BACKGROUND OF THE INVENTION

### (Field of the Invention)

The present invention relates to a saddle-riding type automotive vehicle, such as, for example, a motorcycle, of a type having at least front and rear wheels and capable of being driven by a rider then getting thereon in a fashion with his or her knees positioned on respective lateral sides of a vehicle body.

### (Description of Related Art)

In an automotive vehicle such as, for example, a motorcycle currently widely used, the use has been made of wind guide members for intake of the incoming wind for use in cooling a heat-generating section of a vehicle combustion engine and also for preventing the incoming wind from impinging on the rider's legs, particularly rider's knees. JP Laid-open Patent Publication No. 2010-162990 discloses the use of shrouds (generally identified by 22 in Fig. 3 thereof) positioned forwardly of side panels so that a fresh air, which has not been used to air-cool the engine and hence has not been elevated in temperature, can be supplied to the rider (shown by the arrow A in Fig. 3 of JP Laid-open Patent Publication No. 2010-162990) through the shroud.

It has however been found that since the air guiding structure disclosed in, for example, the JP Laid-open Patent Publication No. 2010-162990 referred to above is so designed and so configured as to positively guide the incoming wind, then collected through the shrouds, towards the side panels, portions of the incoming wind flowing along the side panels in a direction rearwardly of the automotive vehicle tend to wraparound to impinge upon the driver's legs and, therefore, the riding amenity at a high speed travel is apt to be lowered.

EP 0 248 619 A2 discloses a motorcycle comprising: a subtantially longitudinal frame; front and rear wheels rotatably supported on said frame; an engine mounted on said frame between said front and rear wheels; a rear fork supporting said rear wheel and vertically swingably mounted on a rear end of said frame; a rear fender disposed in the vicinity of an upper portion and opposite side portions of said rear wheel and covering said portions of the rear wheel; and a fairing means having a ram air inlet port defined in a front portion thereof and extending from a position in front of said frame in covering relation to said engine toward a position above the rear wheel where the fairing means covers said rear fender in surrounding relation thereto, said fairing means cooperating with said rear fender in providing a discharge duct defining a discharge air passage therein and having an air discharge port defined in an open end portion thereof.

### SUMMARY OF THE INVENTION

In view of the foregoing, the present invention has been devised to substantially eliminate the problems and inconveniences inherent in the prior art air guiding structure and is intended to provide a saddle-riding type automotive vehicle that is so designed and so configured as to avoid an undesirable collision of the incoming wind against the rider's legs.

In order to accomplish the foregoing object of the present invention, the latter provides a saddle-riding type automotive vehicle of a kind having at least front and rear wheels at front and rear portion thereof and capable of being driven by a rider then getting thereon in a fashion with rider's knees positioned on respective lateral sides of a vehicle body, which vehicle includes a drive source disposed between the front and rear wheels for driving such wheels; a heat exchanger disposed at a location forwardly of the drive source with respect to the direction of forward travel of the automotive vehicle for cooling a cooling medium with the utilization of an incoming wind; and a leg wind protector extending generally vertically in a direction at angles to the direction of forward travel of the automotive vehicle and having a front edge portion positioned rearwardly of the heat exchanger. The leg wind protector has an outer surface having a front region progressively bulging from the front edge portion to a top portion rearward of the front edge portion in a direction laterally outwardly with respect to the direction of forward travel of the automotive vehicle and a rear region depressed from the top portion, which is provided at a location forwardly of a region of the rider's leg below a knee portion, in a direction laterally inwardly with respect to a mid-center plane of the automotive vehicle, the bulging amount of the front region being maximum at the top portion. Also, a region laterally of the automotive vehicle between the front edge portion and the top portion of the leg wind protector and at a location forwardly of the leg wind protector, an open space is defined through which the incoming wind flows in a direction parallel to the longitudinal sense of the automotive vehicle. It is noted that in this context "the region of the rider's leg below the knee portion" means a rider's knee and a region of the rider's leg below the knee in riding position.

According to the present invention, the incoming wind flowing through the open space in the direction parallel to the longitudinal sense of the automotive vehicle impinges directly upon the leg wind protector and is subsequently guided by the top portion of the leg wind protector, which is provided at a location forwardly of and in the vicinity of that region of the rider's leg below the knee portion, in a direction laterally outwardly of the automotive vehicle. Since in this way the incoming wind is guided laterally outwardly of the automotive vehicle at the location forwardly of and in the vicinity of the region of the rider's leg below the knee portion, the position at which the incoming wind is inwardly wrapped around can be shifted to a location rearwardly of that region of the rider's leg below the knee portion and, therefore, it is possible to suppress the incoming wind from impinging upon that region of the rider's leg below the knee portion.

In the saddle-riding type automotive vehicle of the structure described above, at least a part of the front edge portion of the leg wind protector, when viewed from front, is preferably exposed to the outside. With this structural feature a region where a part of the front edge portion is so exposed to the outside has a wide surface from the front edge portion to the top portion to receive the incoming wind to guide it in a direction laterally outwardly. Therefore, it is possible to further effectively suppress the incoming wind from impinging upon that region of the rider's leg below the knee portion.

In the saddle-riding type automotive vehicle of the structure described above, the front edge portion of the leg wind protector is preferably disposed rearwardly of a front end portion of the drive source. The disposition of the front edge portion of the leg wind protector in the manner described above results in the reduction of the dimension of the leg wind protector as measured in a direction parallel to the longitudinal sense of the automotive vehicle and, therefore, the direction of flow of the incoming wind can be abruptly changed by the leg wind protector at a location immediately preceding that region of the rider's leg below the knee portion. Accordingly, the incoming wind can be suppressed from impinging upon that region of the rider's leg below the knee portion further effectively, and also the effect of heat dissipation can be increased as a result of the exposure of at least that part of the drive source laterally outwardly to the outside.

In a preferred embodiment of the present invention, the top portion and the front edge portion of the leg wind protector may extend substantially parallel to each other and extend rearwardly as they advance downwardly from a position in the vicinity of the rider's knee. This structural feature makes it possible to guide the incoming wind in the direction laterally outwardly relative to the whole of the region of the rider's leg below the knee portion at the location forwardly thereof and, hence, the possible impingement of the incoming wind upon that region of the rider's leg below the knee portion can be further relieved.

Preferably, the leg windshield is of one piece construction. The leg wind protector of one piece construction can be advantageously made by the use of a shaping mold technique. Therefore, an undesirable increase of the number of component parts can be suppressed advantageously.

In another preferred embodiment of the present invention, the rear region of the leg wind protector may have a recessed portion defined at a location rearwardly of the top portion so as to be depressed laterally inwardly with respect to the mid-center plane of the automotive vehicle for accommodating the region of the rider's leg below the knee portion. This feature makes it possible to form the windshield region for preventing the incoming wind from impinging upon the rider's knee portion and the knee grip region for accommodating that region of the rider's leg below the knee portion integrally with each other. The integral formation of the knee grip region and the windshield region as described above allows the incoming wind to be guided laterally outwardly at a position proximate to the rider's leg.

In a further preferred embodiment of the present invention, the leg wind protector may have a rear end extended to a position rearwardly of a rear end of a main frame to enclose a gap delimited between a rider's seat and a rear frame from lateral side. This structural feature makes it possible to reduce the number of component part because the leg wind protector can be substituted for a side covering.

In a still further preferred embodiment of the present invention, a lower portion of the front region of the leg wind protector may cover only a rear portion of the drive source from lateral side. This structural feature allows a major portion of the drive source to be exposed to the outside and, therefore, the effect of heat dissipation becomes large.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a side view showing a motorcycle, which is one of saddle-riding type automotive vehicles, in accordance with a preferred embodiment of the present invention;
Fig. 2 is a front elevational view of the motorcycle shown in Fig. 1;
Fig. 3 is a fragmentary top plan view showing a front portion of the motorcycle shown in Fig. 1;
Fig. 4 is a side view showing one of leg wind protectors employed in the motorcycle shown in Fig. 1; and
Fig. 5 is a rear elevational view showing only a right side portion of the motorcycle with respect to the mid-center plane of the motorcycle containing through the longitudinal axis of the motorcycle and lying at right angles to the road surface.

### DESCRIPTION OF PREFERRED EMBODIMENTS

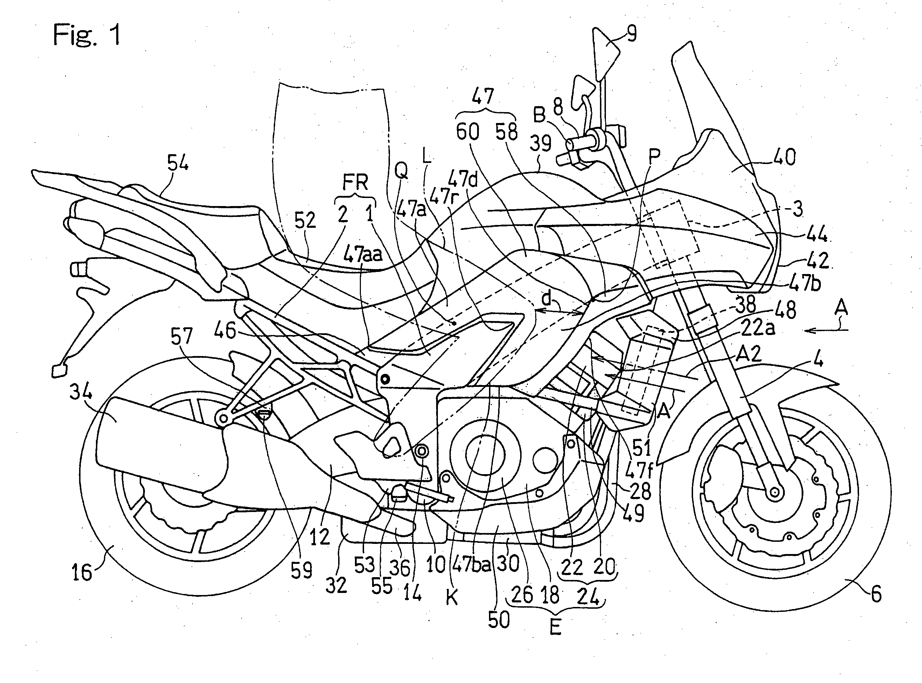

A preferred embodiment of the present invention will now be described in detail with particular reference to the accompanying drawings. In particular, Fig. 1 illustrates a side view of a motorcycle, which is one of saddle-riding type automotive vehicles, designed and configured in accordance with the preferred embodiment of the present invention. The motorcycle shown therein includes a motorcycle frame structure FR including a front frame substructure, comprised of a main frame 1, and a rear frame substructure comprised of a rear frame 2 coupled with a rear portion of the main frame 1 in any manner well known to those skilled in the art. The main frame 1 has a head block 3 secured to a front end portion thereof, and a front fork assembly 4 is supported by this head block 3 with a front wheel 6 rotatably supported by a lower end portion of such front fork assembly 4. A handlebar 8 is mounted on an upper end portion of the front fork assembly 4 for angular movement together therewith for motorcycle steering purpose and has left and right rear viewing mirrors 9 mounted on left and right end portions of the handlebar 8.

The main frame 1 referred to above also has a rear end portion extending downwardly rearwardly of the motorcycle with respect to the direction of forward travel thereof, and a swingarm bracket 10 is formed in that rear end portion, and a front end of a swingarm 12 is supported by the swingarm bracket 10 through a pivot pin 14 for pivotal movement relative to the swingarm bracket 10. This swingarm 12 has a rear wheel 16 rotatably supported by a rear end portion thereof.

A motorcycle combustion engine E, which forms a drive source, is mounted on a lower intermediate portion of the main frame 1 and positioned intermediate between the front and rear wheels 6 and 16 in a fashion tilted forwards with respect to the direction of forward travel of the motorcycle, and the rear wheel 16 is adapted to be driven by this combustion engine E through a drive transmitting member (not shown) such as, for example, a substantially endless chain or belt. The combustion engine E is shown as employed in the form of a four-stroke cycle parallel multicylinder engine in the practice of the illustrated embodiment and includes a crankcase 18, a cylinder block 24 above the crankcase 18 and a transmission casing 26 positioned rearwardly of the crankcase 18. The cylinder block 24 has a cylinder 20 protruding upwardly from the crankcase 18 and a cylinder head 22 mounted atop the cylinder 20.

The cylinder head 22 is somewhat tilted forwards, four exhaust pipes 28 fluidly connected with a front surface of the cylinder head 22 are merged together at a collecting tube 30 below the combustion engine E, and an exhaust chamber 32, fluidly connected with a downstream end of the collecting tube 30 with respect to the direction of flow of exhaust gases, and an exhaust muffler 34, positioned on one side of the rear wheel 16, are fluidly connected together by means of a connecting tube 36. The exhaust pipes 28 are exposed to the outside of the cylinder head 22 and the cylinder block 24 so as not to overlap with the cylinder head 22 and the cylinder block 24when viewed from side.

A radiator 38, which is a kind of heat exchanger for cooling a cooling medium by the utilization of the incoming wind A, is disposed at a location forwardly of the combustion engine E and rearwardly of the front wheel 6. In the illustrated embodiment, the cooling medium is employed in the form of a cooling water for cooling the combustion engine E. A fuel tank 39 is mounted on the main frame 1 at a location above the combustion engine E and rearwardly of the handlebar 8. An upper cowl 40 made of a synthetic resin is mounted on a front portion of the motorcycle so as to enclose an area forwardly of the head block 3, with a headlamp unit 42 being in turn mounted on such upper cowl 40. Left and right side cowls 44 are supported at a front portion of the main frame 1, and left and right leg wind protectors 47 are supported by the main frame 1 at respective locations rearwardly of the mating side cowls 44 for preventing portions of the incoming wind A from impinging upon rider's legs, more specifically regions K of the rider's left and right legs below associated knee portions.

Lateral areas of the radiator 38 with respect to a width direction of the motorcycle are enclosed by respective radiator shrouds 48 that are members separate from the associated leg wind protectors 47, and a lower portion of the combustion engine E and lateral portions of the collecting tube 30 are enclosed by a lower cowl 50. A lower portion of each of the leg wind protectors 47 and a lower portion of each of the radiator shrouds 48 are connected together through a connecting bar 49. In other words, each of the leg wind protectors 47 is disposed at a site rearwardly of the associated radiator shroud 48 and spaced a distance therefrom in a direction longitudinally of the motorcycle with a space left therebetween. Through this space the incoming wind A, which has been used to cool the radiator 38, is discharged to the atmosphere.

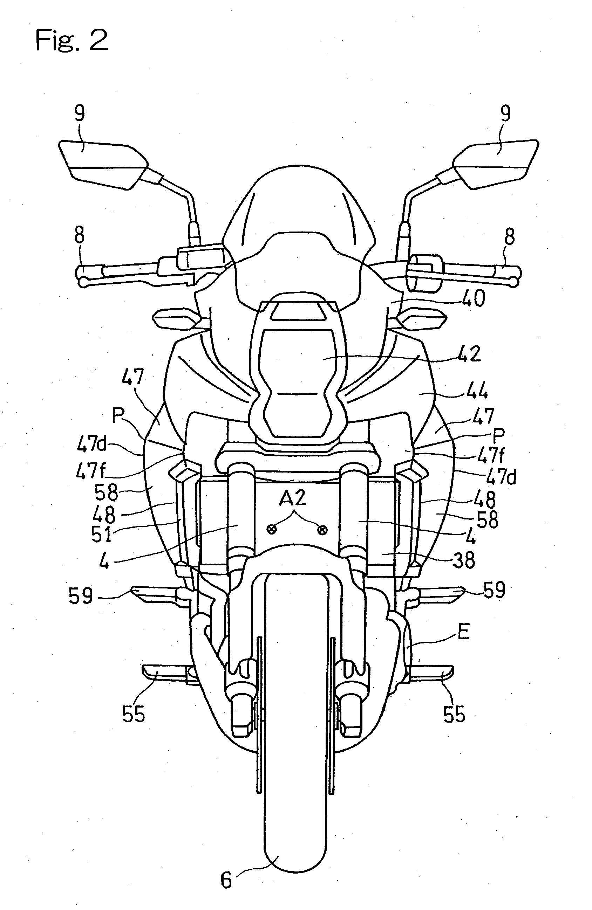

Referring to Fig. 2, a portion of an outer surface of each of the radiator shrouds 48, which lies at a location substantially intermediate of the height of such radiator shroud 48, is depressed inwardly relative to upper and lower portions of such outer surface of each radiator shroud 48 in a direction parallel to the widthwise direction of the motorcycle to thereby define a guide face 51 to allow the incoming wind A to flow laterally of the motorcycle. At a location rearwardly of the fuel tank 39 best shown in Fig. 1, a motorcyclist's seat (rider's seat) 52 and a fellow passenger's seat 54 are mounted on an upper portion of the rear frame 2. A space delimited between a portion of the rider's seat 52 intermediate of the length of the rider's seat 52 and the rear frame 2 is enclosed or covered from lateral by a side covering 46 that is employed for each side of the motorcycle. This side covering 46, although shown as a member separate from the adjacent leg wind protector 47, may be formed integrally with the adjacent leg wind protector 47. Left and right foot rests 55 for the motorcyclist or rider are secured to a lower portion of the main frame 1 through respective first foot rest brackets 53, and left and right foot rests 59 for a fellow passenger are similarly secured to a location below the rear frame 2 through respective second foot rest brackets 59.

The left and right leg wind protectors 47 are substantial identical in structure with each other except that they are of such shapes as to be positioned on respective sides of the motorcycle in a fashion substantially symmetric relative to each other.

Each of the leg wind protectors 47 includes a front region 58 bulged laterally outwardly so as to prevent the incoming wind from impinging upon the knee portion of the motorcycle rider and a rear region or a recessed portion 60 for accommodating that region (shank region) K of the rider's leg below the knee portion at a location rearwardly of the front region 58. The recessed portions (rear regions) 60 of the left and right wind protectors 47, each referred to above, define knee grip portions that are to be sandwiched by the rider's left and right legs to allow the rider to hold a riding stance. On the other hand, the front regions 58 referred to above form a windshield portions. Since the knee grip portion and the windshield portion are formed integrally with each other in this way, the incoming wind can be guided laterally outwardly at a site near the rider's leg.

The leg wind protectors 47, when viewed from side, extends in a generally vertical direction so as to follow the length of the shank region of the left or right leg L of the rider then straddling over the rider's seat 52 as shown by the double-dotted line in Fig. 1 and is ramified at a base 47c, which is defined by a front upper portion thereof, so as to further extend dichotomously in a direction rearwardly downwardly from such base 47c. The leg wind protector 47 so ramified has a first leg windshield branch 47a, which has a tip (rear end) 47aa extended to the associated side covering 46, and a second leg windshield branch 47b which is positioned below the first leg windshield branch 47a and has a tip (rear end) 47ba extended to a position adjacent an upper region of an upper surface of the transmission casing 26 for the combustion engine E. In other words, the knee grip portion (recessed portion) 60 has a rear end 47aa is positioned above and rearwardly of the pivot pin 14, more specifically positioned at a location rearwardly of the rear end portion of the main frame 1.

It is to be noted that, if so desired, the rear end 47aa referred to above may be further extended rearwardly to enclose a space between the rider's seat 52 and the rear frame 2 from a lateral direction. By so doing, the side covering 46 on each side of the motorcycle can be dispensed with.

Each of the leg wind protectors 47 has an upper edge held in contact with a lower portion of a rear half of the corresponding side cowl 44, a lower portion of the fuel tank 39 and a lower portion of a front region of the rider's seat 52 and covers a portion of the main frame 1 from laterally outwards. In other words, a front end of the knee grip portion (recessed portion) 60 is disposed in continuance below the corresponding side cowl 44. Each of the leg wind protectors 47 is painted black with a coloring resin and has its outer surface texturing. In other words, each of the leg wind protectors 47 is non-painted so that the color of a material used to form it can appear on the outer surface thereof.

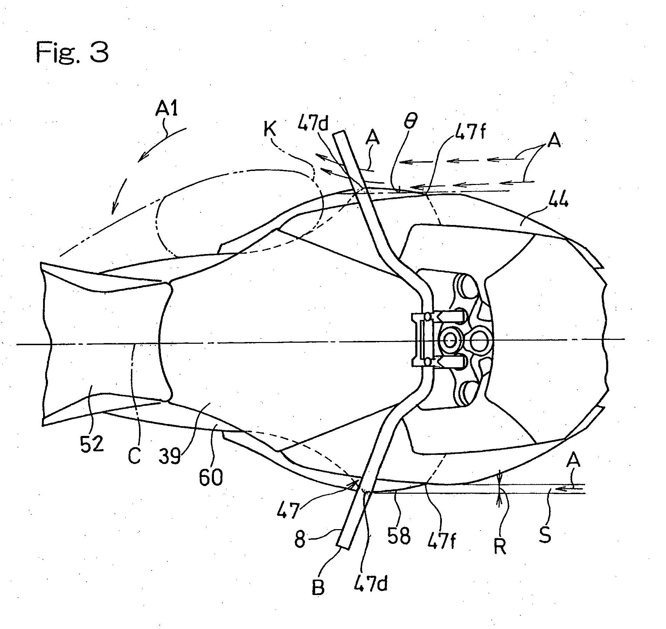

The outer surface of the leg wind protector 47 has a front edge portion 47f extending generally or substantially vertically and somewhat tilted downwardly rearwardly and is so formed as to bulge laterally outwardly of the motorcycle from that front edge portion 47f as the outer surface advances rearwardly of the motorcycle. The bulging amount of the front edge portion 47f (i.e., the extent to which the front edge portion 47f is so bulged) is maximized, as shown in Fig. 3, at a top portion 47d comprised of a ridge that is defined in the vicinity of the rider's leg and that region of the rider's leg below the knee portion and forwardly of the knee. A portion of the outer surface of the leg wind protector 47 within a region between the top portion 47d and the rear end thereof is smoothly recessed inwardly in a lateral direction of the motorcycle. In other words, as shown in Fig. 1, the portion of the outer surface of the leg wind protector 47 delimited between the front edge portion 47f, and the top portion 47d forms a front region 58, which serves as a windshield portion, and another portion thereof delimited between the top portion 47d and the rear end thereof defines the rear region or the recessed portion 60, which serves as the knee grip portion that is recessed laterally inwardly towards the mid-center plane C of the motorcycle.

The front region 58 of the leg wind protector 47 is so formed that the width of the front region 58 as measured in a direction parallel to the longitudinal axis of the motorcycle is substantially uniform over the height of such front region 58 and, accordingly, the same bulging amount of the outer surface of the leg wind protector 47, that is bulged as described above, and the tilt thereof can be made equal at upper and lower portions thereof. A lower portion of the front region 58 that is bulged covers only a rear portion of the cylinder block 24 from lateral side. As best shown in Fig. 2, at least a portion of the front edge portion 47f of the leg wind protector 47 as viewed from front is exposed to the outside and, accordingly, a part of the front region 58 of the leg wind protector 47, ranging from the front edge portion 47f to the top portion 47d, is exposed to the outside when viewed from front.

As shown in Fig. 1, the front region of the leg wind protector 47 is disposed in continuity to a lower portion of the corresponding side cowl 44, and the front edge portion 47f of the leg wind protector 47 is disposed rearwardly of the radiator 38 and also rearwardly of a front end portion of the combustion engine E, that is, a front end portion 22a of the cylinder head 22. Also, a part of the front edge portion 47f is positioned rearwardly of a grip rear position B of the handlebar 8. The front edge portion 47f of the leg wind protector 47 enclosed only the rear portion of the cylinder block 24 from lateral side.

The top portion 47d of the leg wind protector 47 extends substantially parallel to the front edge portion 47f. More specifically, the top portion 47d extends from a position near to the knee portion, which is an upper portion, towards a lower portion and is somewhat tilted rearwardly. Assuming that the rider occupying the rider's seat 52 has a standard height of 160 to 190 cm, the top portion 47d is held at a position d = 10 to 30 cm forwards from a front edge of that region K of the rider's leg below the knee portion. As can readily be understood from Fig. 2, the bulging amount of the leg wind protector 47 bulged in the manner described hereinbefore is maximal at this top portion 47d and a peak point P of the bulging amount of the leg wind protector 47 is defined at the top of this top portion 47d. On the other hand, as shown in Fig. 1, an innermost point Q, at which the outer surface of the leg wind protector 47 is most depressed inwardly of the motorcycle, is defined in the vicinity of a location intermediate between the tip 47aa of the first leg windshield branch 47a and a root 47r. The innermost point Q referred to above is a site positioned somewhat near to a region of the thigh of the rider's leg L above the back of the knee portion.

As shown in Fig. 2, the peak point P referred to above is positioned at a location laterally outwardly of the fuel tank 39, the associated side cowl 44, the radiator shroud 48 and the combustion engine E. Also, at a location forwardly of the associated left or right raider's foot rest 55, the peak point P is positioned laterally outwardly of all component parts except for the handlebar 8 and the associated rear viewing mirror 9. Accordingly, the surrounding component parts 39, 44, 48 and E are prevented from being impaired or otherwise damaged when the motorcycle falls down. While those surrounding component parts are painted component parts, the leg wind protector 47 itself is non-painted and is prepared from a colored resin as hereinbefore described, and therefore, not only will the impaired or damaged areas, which occurred when the motorcycle fell down, not become noticeable, but also replacement costs will be inexpensive. Also, since the leg wind protector 47 is formed as a member separate from any of front fairings such as, for example, the upper fairing 40 and the associated side fairing 44, the replacement can be accomplished inexpensively as compared with the case in which it is formed integrally with the front fairings.

As shown in Fig. 3, an open space S, through which the incoming wind A flows in a direction parallel to the longitudinal sense of the motorcycle, is formed at a location forwardly of each of the leg wind protectors 47 and in a region R extending in a width direction of the motorcycle between the front edge portion 47f and the top portion 47d of each leg wind protector 47. In other words, at a location forwardly of each of the leg wind protectors 47, no member for guiding the incoming wind A exists. Accordingly, the incoming wind A impinges directly upon each of the leg wind protectors 47.

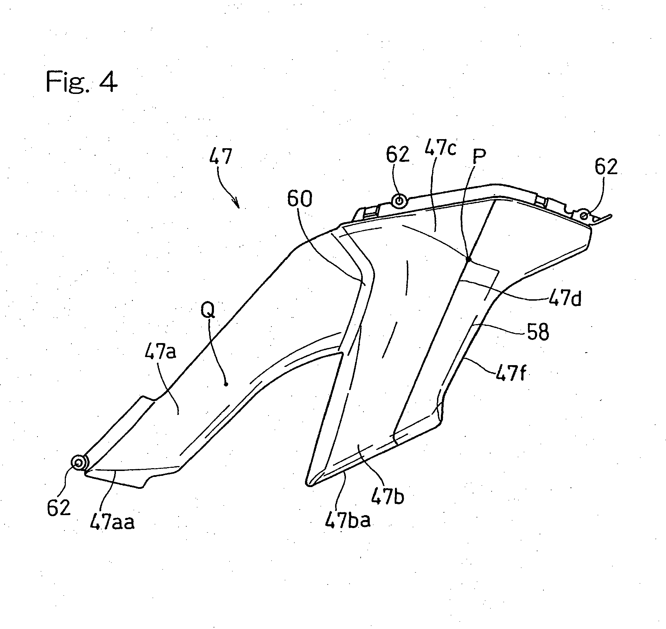

As shown in Fig. 4 in a side view, each of the leg wind protectors 47 has a plurality of mounting holes 62 defined in an upper edge portion of the base 47c and an upper edge portion of the rear of the first leg windshield branch 47a, and each of those leg wind protectors 47 is supported by the vehicle body by inserting bolts (not shown) through those mounting holes 62 and then firmly threading into corresponding threaded holes (not shown) defined in the main frame 1 shown in Fig. 1.

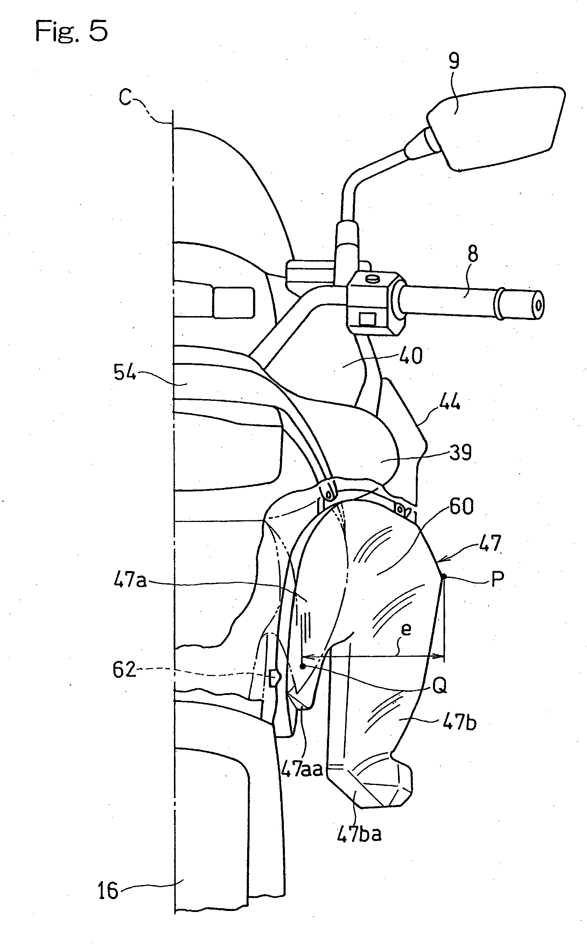

As can readily be understood from Fig. 5 showing a rear view, the second leg windshield branch 47b of each of the leg wind protectors 47 has a lower portion of an outer surface thereof formed with a recessed face that is oriented laterally outwardly and rearwardly to allow it to follow the inside of that region K of each of the rider's legs below the knee, which region K includes an upper half of the shank of the leg. The amount of depression e as measured from the peak point P at the innermost point Q lying on the outer surface of the first leg windshield branch 47a of each of the leg wind protectors 47 is chosen to be within the range of 5 to 30 cm and preferably within the range of 15 to 25 cm.

With the left and right leg wind protectors 47 being so constructed as hereinabove described, as shown in Fig. 3, it will readily be seen that the incoming wind A flowing through the open spaces S in a direction parallel to the longitudinal sense of the motorcycle impinges directly on the left and right leg wind protectors 47 and are then guided to flow laterally outwardly from the respective top portions 47d of the leg wind protectors 47 positioned in the vicinity and forward of those regions K of the rider's legs below the knee portions. Since in this way the incoming wind A is guided at locations in the vicinity of those region K of the rider's legs below the knee portions so as to flow laterally outwardly, the position A1 at which the incoming wind A is inwardly wrapped around can be shifted to a site displaced rearwardly from that region K of each of the rider's legs below the knee portions. Accordingly, it is possible to prevent the incoming wind A from impinging upon the regions K of the rider's legs below the knee portions.

Also, by allowing the incoming wind A to abruptly change its course of flow at a location as near as possible to the rider's knees, the incoming wind A then flowing laterally outwardly of the top portions 47d can be purged in a laterally outward direction at a location immediately forwardly of the rider's knees and, therefore, the incoming wind A tending to impinge upon the rider can be alleviated. By way of example, in the case of a saddle-riding type automotive vehicle of a full cowl type in which a laterally outer portion of the vehicle extending up to the front wheel is enclosed by a cowl or fairing, the position at which the incoming wind is guided in a direction laterally outwardly of the motorcycle is defined in the vicinity of the front wheel that is spaced a considerable distance forwardly from the rider's legs, and therefore, the incoming wind guided in that direction laterally outwardly of the motorcycle tends to approach again the motorcycle as it goes in a rearward direction.

As best shown in Fig. 2, during the travel of the motorcycle, not only the incoming air A2 having passed across the radiator 38 at respective locations inwardly of the radiator shrouds 48, but also the incoming wind A having guided by the guide faces 51 on respective outer sides of the radiator shrouds 48 impinge upon the front regions 58 of the leg wind protectors 47 and are then guided in a direction laterally outwardly while having been guided by the front regions 58, and, accordingly, it is possible to effectively alleviate the impingement of the incoming air A upon those regions K of the rider's legs below the knee portions, shown in Fig. 1.

As shown in Fig. 2, at least a portion of the front edge portion 47f of each of the leg wind protectors 47 as viewed from front is exposed to the outside, and, therefore, a region where a part of the front edge portion 47f is so exposed to the outside has a wide surface from the front edge portion 47f to the top portion 47d to receive the incoming wind A to guide it in a direction laterally outwardly. Therefore, as shown in Fig. 1, it is possible to further effectively suppress the incoming wind A from impinging upon that region K of the rider's leg below the knee portion.

Also, since the front edge portion 47f of each of the leg wind protectors 47 is disposed rearwardly of the front end portion 22a of the cylinder head 22, the dimension of each of the leg wind protectors 47 as measured in a direction parallel to the longitudinal sense of the motorcycle can be reduced, wherefore, as shown in Fig. 3, the respective leg wind protector 47 abruptly changes the direction of flow of the incoming wind A at a location preceding the associated region K of the rider's leg below the knee portion to thereby relieve the impingement of the incoming air A upon that region K of the rider's leg below the knee portion. Moreover, since that portion of the combustion engine E is not covered by the adjacent leg wind protector 47 and is exposed in the lateral direction, the effect of heat dissipation will become large.

Since as shown in Fig. 4 major portions of the top and front edge portions 47a and 47f of each of the leg wind protectors 47 extend substantially parallel to each other and also, as shown in Fig. 1, extend in the rearward direction downwardly from a location adjacent the rider's knee, in the entirety of that region K of each of the rider's legs below the knee portion, the incoming wind A can be guided in the laterally outward direction, making it possible to further relieve the incoming air A from impinging upon that region k of the rider's leg below the knee portion.

In addition, although the front region (windshield portion) 58 and the recessed region (knee grip portion) 60, both forming respective parts of each of the leg wind protectors 47, may be members separate from each other, the windshield portion 58 and the knee grip portion 60, both employed in the practice of the previously described embodiment, are formed integrally with each other to provide the respective leg wind protector 47, and therefore, an undesirable increase of the number of component parts can be advantageously suppressed. Where they are used as the members separate from each other, only replacement of the windshield portion 58 is sufficient in the event that the top portion 47d of one or both of the leg wind protectors 47 are damaged incident to fall-down of the motorcycle and, therefore, such replacement can be further inexpensively accomplished.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. By way of example, the saddle-riding type automotive vehicle to which the present invention can be applied may suffices to have at least two wheels at front and rear portions thereof such as, for example, a tricycle or a four-wheeled buggy.

Also, as far as the feature that a good wind shielding effect can be obtained is concerned, the present invention can be applied to an automotive vehicle of a kind, in which no cowling is formed between the front wheel and the combustion engine such as, for example, a bikini fairing type, a half fairing type or a naked type. Although in the embodiment described hereinbefore, the combustion engine E has been shown and described as employed as the drive source, the drive source may be an electrically operated motor.

In addition, although in the embodiment described hereinbefore, the use has been shown and made of the radiator 38 as a heat exchanger that is operable with an engine cooling water, an oil cooler may be instead used, in which case the cooling medium should be an oil.

Accordingly, such changes and modifications are, unless they depart from the scope of the present invention as delivered from the claims annexed hereto, to be construed as included therein.

### [Reference Numerals]

6 Front wheel
16 Rear wheel
22 Cylinder head
22a Front end portion of the cylinder head (Front portion of the engine)
38 Radiator (Heat exchanger)
46 Side covering
47 Leg wind protector
47f Front edge portion of the leg wind protector
47d Top portion of the leg wind protector
58 Front region
60 Rear region (Recessed portion)
A Incoming wind
C Mid-center plane
E Motorcycle combustion engine (Drive source)
FR Motorcycle frame structure
K Region of the leg below the knee portion
S Open space

## Claims

1. A saddle-riding type automotive vehicle of a kind having at least front and rear wheels (6, 16) at front and rear portion thereof and capable of being driven by a rider then getting thereon in a fashion with rider's knees positioned on respective lateral sides of a vehicle body, which vehicle comprises:
a drive source (E) disposed between the front and rear wheels (6, 16) for driving such wheels (6, 16);
a heat exchanger (38) disposed at a location forwardly of the drive source (E) with respect to the direction of forward travel of the automotive vehicle for cooling a cooling medium with the utilization of an incoming wind (A); and
a leg wind protector (47) extending generally vertically in a direction at angles to the direction of forward travel of the automotive vehicle and having a front edge portion (47f) positioned rearwardly of the heat exchanger (38);
wherein the leg wind protector (47) has an outer surface having a front region (58) progressively bulging from the front edge portion (47f) to a top portion (47d) rearward of the front edge portion (47f) in a direction laterally outwardly with respect to the direction of forward travel of the automotive vehicle and a rear region (60) depressed from the top portion (47d), which is provided at a location forwardly of a region (K) of the rider's leg below a knee portion, in a direction laterally inwardly with respect to a mid-center plane (C) of the automotive vehicle, the bulging amount of the front region being maximum at the top portion (47d); and
wherein in a region laterally of the automotive vehicle between the front edge portion (47f) and the top portion (47d) of the leg wind protector (47) and at a location forwardly of the leg wind protector (47), an open space (S) is defined through which the incoming wind (A) flows in a direction parallel to the longitudinal sense of the automotive vehicle.

2. The saddle-riding type automotive vehicle as claimed in claim 1, in which at least a part of the front edge portion (47f) of the leg wind protector (47), when viewed from front, is exposed to the outside.

3. The saddle-riding type automotive vehicle as claimed in claim 1 or 2, in which the front edge portion (47f) of the leg wind protector (47) is disposed rearwardly of a front end portion of the drive source (E).

4. The saddle-riding type automotive vehicle as claimed in any one of claims 1 to 3, in which the top portion (47d) and the front edge portion (47f) of the leg wind protector (47) extend substantially parallel to each other and extend rearwardly as they advance downwardly from a position in the vicinity of the rider's knee.

5. The saddle-riding type automotive vehicle as claimed in any one of claims 1 to 4, in which the leg wind protector (47) is of one piece construction.

6. The saddle-riding type automotive vehicle as claimed in any one of claims 1 to 5, in which the rear region of the leg wind protector (47) has a recessed portion (60) defined at a location rearwardly of the top portion (47d) so as to be depressed laterally inwardly with respect to the mid-center plane (C) of the automotive vehicle for accommodating the region (K) of the rider's leg below the knee portion.

7. The saddle-riding type automotive vehicle as claimed in any one of claims 1 to 6, in which the leg wind protector (47) has a rear end (47aa) extended to a position rearwardly of a rear end of a main frame (1) to enclose a gap delimited between a rider's seat (52) and a rear frame (2) from lateral side.

8. The saddle-riding type automotive vehicle as claimed in any one of claims 1 to 7, in which a lower portion of the front region (58) of the leg wind protector (47) covers only a rear portion of the drive source (E) from lateral side.

## Patentansprüche

1. Kraftfahrzeug mit Sattel mit zumindest einem Vorder- und Hinterrad (6, 16) an seinem vorderen und hinteren Abschnitt, welches von einem Fahrer gefahren werden kann, welcher darauf in einer Weise Platz nimmt, dass die Knie des Fahrers auf entsprechend lateralen Seiten eines Fahrzeugkörpers angeordnet sind, wobei das Fahrzeug umfasst:
eine Antriebsquelle (E), welche zwischen dem Vorder- und Hinterrädern (6, 16) angeordnet ist, um die Räder (6, 16) anzutreiben;
einen Wärmetauscher (38), welcher an einem Ort vor der Antriebsquelle (E) in Bezug zur Richtung der Vorwärtsfahrt des Kraftfahrzeugs angeordnet ist, um ein Kühlmedium unter Nutzung des eingehenden Winds (A) zu kühlen; und
einen Beinwindschutz (47), welcher sich im Allgemeinen vertikal in eine Richtung unter Winkeln zur Richtung der Vorwärtsfahrt des Kraftfahrzeugs erstreckt, und welcher einen Vorderkantenabschnitt (47f) aufweist, welcher hinter dem Wärmetauscher (38) angeordnet ist;
wobei der Beinwindschutz (47) eine Außenfläche mit einem vorderen Bereich (58), welcher sich vom Vorderkantenabschnitt (47f) zu einem oberen Abschnitt (47d) hinter dem Vorderkantenabschnitt (47f) in eine Richtung lateral nach außen in Bezug zur Richtung der Vorwärtsfahrt des Kraftfahrzeugs zunehmend aufwölbt, und einem hinteren Bereich (60) aufweist, welcher ab dem oberen Abschnitt (47d) vertieft ist, welcher an einem Ort vor einem Bereich (K) der Fahrerknies unter einem Knieabschnitt vorgesehen ist, in einer lateral nach innen in Bezug auf eine Mittelpunktsebene (C) des Kraftfahrzeugs gerichteten Richtung, wobei der Vertiefungsbetrag des vorderen Bereichs am oberen Abschnitt (47d) maximal ist; und
wobei in einem lateralen Bereich des Kraftfahrzeugs zwischen dem Vorderkantenabschnitt (47f) und dem oberen Abschnitt (47d) des Beinwindschutzes (47) und an einem Ort vor dem Beinwindschutz (47) ein Freiraum (S) definiert ist, durch welchen der eingehende Wind (A) in eine Richtung strömt, welche parallel zur Längsrichtung des Kraftfahrzeugs ist.

2. Kraftfahrzeug mit Sattel nach Anspruch 1, bei welchem zumindest ein Teil des Vorderkantenabschnitts (47f) des Beinwindschutzes (47), von vorne gesehen, der Außenseite ausgesetzt ist.

3. Kraftfahrzeug mit Sattel nach Anspruch 1 oder 2, bei welchem der Vorderkantenabschnitt (47f) des Beinwindschutzes (47) hinter einem vorderen Endabschnitt der Antriebsquelle (E) angeordnet ist.

4. Kraftfahrzeug mit Sattel nach einem der Ansprüche 1 bis 3, bei welchem sich der obere Abschnitt (47d) und der Vorderkantenabschnitt (47f) des Beinwindschutzes (47) im Wesentlichen parallel zueinander erstrecken und sich nach hinten erstrecken, mit zunehmenden Verlauf nach unten von einer Position in der Umgebung des Fahrerknies.

5. Kraftfahrzeug mit Sattel nach einem der Ansprüche 1 bis 4, bei welchem der Beinwindschutz (47) einstückig aufgebaut ist.

6. Kraftfahrzeug mit Sattel nach einem der Ansprüche 1 bis 5, bei welchem der hintere Bereich des Beinwindschutzes (47) einen Ausnehmungsabschnitt (60) aufweist, welcher an einem Ort hinter dem oberen Abschnitt (47d) so definiert ist, dass er lateral nach innen in Bezug auf die Mittelpunktebene (C) des Kraftfahrzeugs vertieft ist, um den Bereich (K) der Fahrerbeins unter dem Knieabschnitt unterzubringen.

7. Kraftfahrzeug mit Sattel nach einem der Ansprüche 1 bis 6, bei welchem der Beinwindschutz (47) ein hinteres Ende (47aa) aufweist, welches sich zu einer Position hinter einem hinteren Ende eines Hauptrahmens (1) erstreckt, um eine Lücke zu umschließen, welche zwischen einem Fahrersitz (52) und einem Hinterrahmen (2) von der lateralen Seite abgegrenzt ist.

8. Kraftfahrzeug mit Sattel nach einem der Ansprüche 1 bis 7, bei welchem ein unterer Abschnitt des vorderen Bereichs (58) des Beinwindschutzes (47) nur einen hinteren Abschnitt der Antriebsquelle (E) von der lateralen Seite abdeckt.

## Revendications

1. Véhicule à moteur de type à selle d'un type ayant au moins des roues avant et arrière (6, 16) au niveau de ses parties avant et arrière et pouvant être conduit par un motocycliste qui monte dessus de sorte que les genoux du motocycliste sont positionnés sur les côtés latéraux respectifs d'un corps de véhicule, lequel véhicule comprend :
une source d'entraînement (E) disposée entre les roues avant et arrière (6, 16) pour entraîner de telles roues (6, 16) ;
un échangeur de chaleur (38) disposé à un emplacement vers l'avant de la source d'entraînement (E) par rapport à la direction du déplacement vers l'avant du véhicule à moteur afin de refroidir un milieu de refroidissement avec l'utilisation d'un air entrant (A) ; et
un dispositif pare-vent pour les jambes (47) s'étendant généralement verticalement dans une direction en angle par rapport à la direction du déplacement vers l'avant du véhicule à moteur et ayant une partie de bord avant (47f) positionné en arrière de l'échangeur de chaleur (38) ;
dans lequel le dispositif pare-vent pour les jambes (47) a une surface externe ayant une région avant (58) se renflant progressivement de la partie de bord avant (47f) jusqu'à une partie supérieure (47d) en arrière de la partie de bord avant (47f) dans une direction latéralement vers l'extérieur par rapport à la direction du déplacement vers l'avant du véhicule à moteur et une région arrière (60) enfoncée à partir de la partie supérieure (47d), qui est prévue à un emplacement vers l'avant d'une région (K) des jambes du motocycliste au-dessous d'une partie de genou, dans une direction latéralement vers l'intérieur par rapport à un plan central (C) du véhicule à moteur, la quantité de renflement de la région avant étant maximum au niveau de la partie supérieure (47d) ; et
dans lequel, dans une région latérale du véhicule à moteur entre la partie de bord avant (47f) et la partie supérieure (47d) du dispositif pare-vent pour les jambes (47) et au niveau d'un emplacement vers l'avant du dispositif pare-vent pour les jambes (47), on définit un espace ouvert (S) à travers lequel l'air entrant (A) s'écoule dans une direction parallèle au sens longitudinal du véhicule à moteur.

2. Véhicule à moteur de type à selle selon la revendication 1, dans lequel au moins une partie de la partie de bord avant (47f) du dispositif pare-vent pour les jambes (47), lorsqu'elle est observée depuis l'avant, est exposée à l'extérieur.

3. Véhicule à moteur de type à selle selon la revendication 1 ou 2, dans lequel la partie de bord avant (47f) du dispositif pare-vent pour les jambes (47) est disposée vers l'arrière d'une partie d'extrémité avant de la source d'entraînement (E).

4. Véhicule à moteur de type à selle selon l'une quelconque des revendications 1 à 3, dans lequel la partie supérieure (47d) et la partie de bord avant (47f) du dispositif pare-vent pour les jambes (47) s'étendent sensiblement parallèlement entre elles et s'étendent vers l'arrière au fur et à mesure qu'elles avancent vers le bas à partir d'une position à proximité des genoux du motocycliste.

5. Véhicule à moteur de type à selle selon l'une quelconque des revendications 1 à 4, dans lequel le dispositif pare-vent pour les jambes (47) est une construction d'un seul tenant.

6. Véhicule à moteur de type à selle selon l'une quelconque des revendications 1 à 5, dans lequel la région arrière du dispositif pare-vent pour les jambes (47) a une partie évidée (60) définie à un emplacement en arrière de la partie supérieure (47d) afin d'être enfoncée latéralement vers l'intérieur par rapport au plan central (C) du véhicule à moteur afin de loger la région (K) des jambes du motocycliste au-dessous de la partie de genou.

7. Véhicule à moteur de type à selle selon l'une quelconque des revendications 1 à 6, dans lequel le dispositif pare-vent pour les jambes (47) a une extrémité arrière (47aa) étendue jusqu'à une position vers l'arrière d'une extrémité arrière d'un cadre principal (1) pour entourer un espace délimité entre le siège (52) d'un motocycliste et un cadre arrière (2) à partir du côté latéral.

8. Véhicule à moteur de type à selle selon l'une quelconque des revendications 1 à 7, dans lequel une partie inférieure de la région avant (58) du dispositif pare-vent pour les jambes (47) recouvre uniquement une partie arrière de la source d'entraînement (E) à partir du côté latéral.
